# EUROPÄISCHE PATENTSCHRIFT

(11) **EP 1 633 586 B1**
(45) Veröffentlichungstag und Bekanntmachung des Hinweises auf die Patenterteilung: **26.03.2008**
(21) Anmeldenummer: 04738534.9
(22) Anmeldetag: 21.05.2004
(51) Int. Cl.: B60J 7/10, B60J 7/12

(54) **VERDECK FÜR EIN KRAFTFAHRZEUG**
SOFT TOP FOR A MOTOR VEHICLE
CAPOTE POUR VEHICULE AUTOMOBILE

(30) Priorität: 30.05.2003 DE 10324756
(43) Veröffentlichungstag der Anmeldung: 15.03.2006
(73) Patentinhaber: Wilhelm Karmann GmbH, 49084 Osnabrück (DE)
(72) Erfinder: BUNSMANN, Winfried, 49143 Bissendorf (DE)
(74) Vertreter: Kronthaler, Wolfgang N.K.
(86) Internationale Anmeldenummer: PCT/DE2004/001064
(87) Internationale Veröffentlichungsnummer: WO 2004/108455

(56) Entgegenhaltungen:
- DE-A- 10 042 491
- DE-A- 19 613 892
- FR-A- 1 465 426
- US-A- 3 348 877

## Beschreibung

Die Erfindung betrifft ein Verdeck für ein Kraftfahrzeug, welches eine Dachöffnung übergreifende Längsstreben und eine die Fahrzeugbreite überspannende flexible Dachhaut aufweist, in montiertem Zustand frontseitig an einem Windschutzscheibenrahmen und heckseitig an einem die Fahrzeugbreite überspannenden Bügel festgelegt ist sowie zum Ablegen zusammenlegbar ist.

Bei Kraftfahrzeugen mit einer Dachöffnung zwischen einem Windschutzscheibenrahmen und einem als Überrollbügel ausgebildeten heckseitigen Bügel, welche auch als Targa-Fahrzeuge bezeichnet werden, sind manuell aus der Dachöffnung herausnehmbare Verdecke hinreichend bekannt.

Bei zahlreichen aus der Praxis bekannten Verdecken für derartige Fahrzeuge ist es erforderlich, daß zur Aufspannung des Verdecks über einer Dachöffnung zunächst Quer- oder Längsspriegel über die Dachöffnung gespannt werden müssen, bevor über diese Spriegel eine textile Dachhaut gezogen und an seitlichen Fahrzeugelementen befestigt werden kann.

Ein solcher Aufbau und Abbau eines Verdeckes erfordert jedoch viele Arbeitsschritte und birgt aufgrund der Teilevielzahl zudem die Gefahr, daß beim Auf- oder Abbau ein Element des Daches vergessen wird, oder im Laufe der Zeit verloren geht.
In der DE 1 580 535 B wird ein im wesentlichen eine Einheit bildendes Verdeck beschrieben, welches an einem Windschutzscheibenrahmen und an einem den Fahrgastraum überspannenden Überrollbügel lösbar befestigt ist, wobei die Befestigung an dem Rahmen der Windschutzscheibe unnachgiebig und die Befestigung an dem Überrollbügel elastisch ausgeführt ist. Das Verdeck wird hier durch seitliche Holme und die Holme verbindende Versteifungen, welche im Einbauzustand den Fahrgastraum in Fahrzeugquerrichtung überspannen, sowie ein darüber gespanntes flexibles Verdeckmaterial gebildet.

Nachteilig ist bei dieser Lösung, daß die Entfaltung des Daches in Fahrzeuglängsrichtung über die Dachöffnung und die Verbindung des Verdecks mit dem Windschutzscheibenrahmen bzw. dem Überrollbügel, an denen das Verdeck im aufgesetzten Zustand jeweils mit einer vorderen Querverstrebung bzw. einer hinteren Querverstrebung über Steck- und Zapfenverbindungen befestigt ist, sehr aufwendig ist.

Weiterhin hat dieses bekannte Verdeck den Nachteil, daß es im demontierten Zustand zwar bezüglich seiner Längsrichtung teilweise z-artig gefaltet werden kann, jedoch ist die Zusammenlegbarkeit begrenzt, und das Verdeck nimmt auch im zusammengefalteten Zustand einen vergleichsweise großen Stauraum ein.

Die gattungsbildende US 3,348,877 beschreibt ein abnehmbares Dach mit einer flexiblen Dachhaut, wobei sich die Dachhaut bis auf die Fahrzeugbrüstung erstreckt und somit gleichzeitig Seitenfenster ausbildet. In einem fahrzeugmittigen Bereich sind elastische, spriegelartige Elemente in Aufnahmen an einem Windschutzscheibenrahmen und an einem hinteren Targa-Bügel angeordnet, über die der flexible Verdeckstoff in gespanntem Zustand verläuft und mittig gehalten wird. Zum Ablegen wird das Verdeck ausgehend von jeder Fahrzeugseite zur Mitte hin jeweils z-artig zusammengefaltet und als Paket abgenommen.

Ein solches Verdeck hat jedoch den Nachteil, daß es eine sehr geringe Stabilität aufweist, wobei insbesondere zu den Fahrzeugseiten hin ein sogenannter Ballon-Effekt zu erwarten ist. Des weiteren erweist sich bei dieser bekannten Lösung die Kinematik zum Montieren oder Demontieren an der Dachöffnung als schwierig handhabbar.

Die DE 100 42 491 A1 offenbart ein abnehmbares Fahrzeug-Faltdach, welches durch in Fahrzeugquerrichtung erfolgendes Zusammenfalten raumsparend verstaubar ist. Dieses Fahrzeug-Faltdach enthält ein flexibles Flachmaterial und Längsstreben, von denen einzelne längsverlaufende Seitenränder des Faltdachs bilden, die im übrigen in Querstreckung des Faltdachs verteilt sind und die, nachdem das Faltdach vor seinem Einsetzen in einen Faltdachausschnitt im starren Fahrzeugdach aufgespannt worden ist, zwischen Querrändern des Faltdachausschnitts einspannbar sind. Zum Aufspannen dienen dabei Stangenanordnungen mit Übertotpunktfunktion.

Da das Faltdach bereits vor der Montage an der Dachöffnung aus einem ziehharmonikaartig gefalteten Zustand in einen aufgespannten Zustand überführt werden muß, und nur in einem solchen aufgespannten Zustand in die Dachöffnung eingesetzt werden kann, bildet das Faltdach eine unhandliche Einheit, welche insbesondere für kleinere Bedienpersonen nur schwierig handhabbar ist. Darüber hinaus schränkt die Erfordernis von seitlichen Dachlängsträgern die konstruktive Gestaltungsfreiheit bei dem Fahrzeug erheblich ein, da das Faltdach bei Fahrzeugen ohne Dachlängsträger, wie beispielsweise Targa-Fahrzeugen, nicht einsetzbar ist.

Es ist daher Aufgabe der vorliegenden Erfindung, ein Verdeck für ein Kraftfahrzeug zu schaffen, welches eine möglichst einfache Handhabung erlaubt, einen großen Freiraum bei der Gestaltung der Dachöffnung des Fahrzeugs läßt und mit der eine stabile Abdeckung der Dachöffnung realisierbar ist.

Erfindungsgemäß wird diese Aufgabe mit einem Verdeck für ein Kraftfahrzeug gelöst, welches eine Dachöffnung übergreifende Längsstreben und eine die Fahrzeugbreite überspannende flexible Dachhaut aufweist, in montiertem Zustand frontseitig an einem Windschutzscheibenrahmen und heckseitig an einem die Fahrzeugbreite überspannenden Bügel festgelegt ist, wobei die Dachhaut und die Längsstreben zu einer vormontierten Einheit verbunden sind, welche zum Ablegen in Fahrzeugquerrichtung zusammenlegbar ist, und jeweils eine die Dachhaut in Fahrzeugquerrichtung begrenzende Längsstrebe als ein mit wenigstens einem Fahrzeugseitenelement verbindbarer Seitenholm ausgebildet ist, und wobei die vormontierte Einheit über die Dachöffnung spannbar ist, indem ein erster Seitenholm an den ihm zugeordneten Fahrzeugseitenelementen oberhalb einer Seitenscheibe befestigt wird und der zweite Seitenholm in Fahrzeugquerrichtung über die Dachöffnung bis zu einer Verbindungsstelle mit diesem zugeordneten Fahrzeugseitenelementen oberhalb einer Seitenscheibe geführt und hieran befestigt wird.

Ein solches manuell zu bedienendes Verdeck mit integrierten Seitenholmen stellt eine leicht handhabbare, aus wenigen Einzelteilen gebildete Einheit dar, mit der die Dachöffnung mit wenigen Handgriffen zu öffnen und abzudecken ist, wobei das erfindungsgemäß ausgestaltete Verdeck mit seinen Seitenholmen eine hohe Stabilität bietet.

Darüber hinaus ist das Verdeck gemäß der Erfindung in Fahrzeugquerrichtung zu einem kompakten Paket zusammenlegbar, welches mit geringem Stauraumbedarf gelagert werden kann.

Zur Erhöhung der Stabilität des Verdecks im auf die Dachöffnung montierten Zustand kann wenigstens eine und vorzugsweise eine Mehrzahl der Längsstreben als Längsspriegel ausgebildet sein, welche die Dachhaut weiter stabilisiert.

Von Vorteil ist es dabei, wenn wenigstens ein vorzugsweise fahrzeugmittig angeordneter Längsspriegel in einer zugeordneten Aufnahme am Windschutzscheibenrahmen von einer Verriegelungseinrichtung gehalten wird, da hierdurch bei schnellerer Fahrt des Fahrzeugs ein sogenannter Ballon-Effekt, welcher auch als Ballooning bezeichnet wird, vermieden werden kann.

Weitere Vorteile und vorteilhafte Ausgestaltungen des Verdecks gemäß der Erfindung sind der Beschreibung, der Zeichnung und den Patentansprüchen entnehmbar.

Ein Ausführungsbeispiel eines Verdecks nach der Erfindung ist in der Zeichnung schematisch vereinfacht dargestellt und wird in der nachfolgenden Beschreibung näher erläutert.

Es zeigt:
- Fig. 1: eine ausschnittsweise dreidimensionale Ansicht eines Kraftfahrzeuges in Targa-Bauweise mit einer zur Anbringung eines erfindungsgemäßen Verdecks ausgelegten Dachöffnung;
- Fig. 2: die Dachöffnung gemäß Fig. 1 mit einem aufgesetzten Verdeck, wobei eine textile Dachhaut zur besseren Darstellung des Aufbaus nur teilweise gezeigt ist;
- Fig. 3: die Dachöffnung und das Verdeck gemäß Fig. 2 während eines Spannens des Verdecks über der Dachöffnung;
- Fig. 4: einen schematischen Querschnitt durch eine fahrerseitige Hälfte des Verdecks gemäß Fig. 1 bis Fig. 3 quer zur Fahrtrichtung bei einem Einbauschritt;
- Fig. 5: das Verdeck in einer der Fig. 4 entsprechenden Darstellung bei einem weiteren Einbauschritt; und
- Fig. 6: eine Detailansicht eines Hakenelements an einem Längsspriegel des Verdecks gemäß Fig. 1 bis Fig. 5 in einer Querschnittsdarstellung.

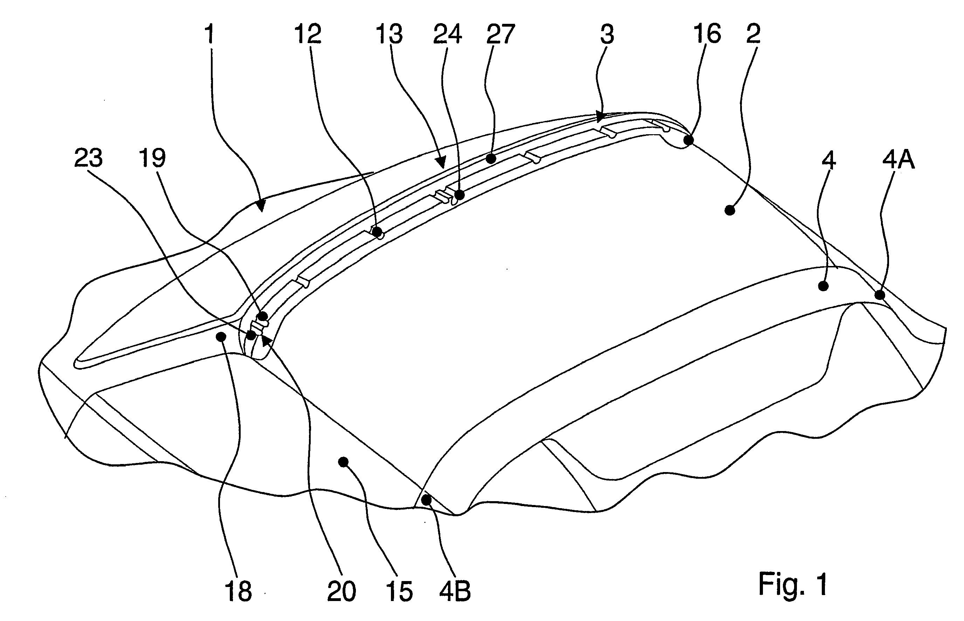

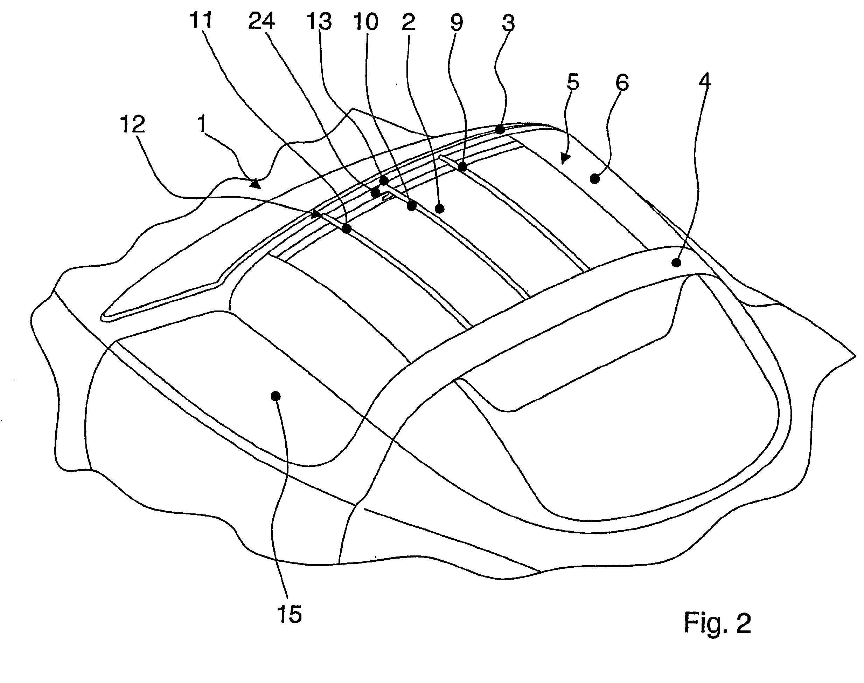

In den Fig. 1 bis Fig. 3 ist jeweils aus einer seitlichen Perspektive ausschnittsweise ein Kraftfahrzeug 1 dargestellt, welches ein Targa-Fahrzeug mit einer Dachöffnung 2 zwischen einem Windschutzscheibenrahmen 3 und einem hier als Überrollbügel dienenden, heckseitigen Bügel 4, welcher eine Fahrgastzelle über die Fahrzeugbreite überspannt, aufgebaut ist.

Zur Abdeckung der Dachöffnung 2 ist ein zwischen dem Windschutzscheibenrahmen 3 und dem Überrollbügel 4 einbaubares Verdeck 5 vorgesehen, welches eine vormontierte Einheit aus mehreren Längsstreben 7 bis 11 und einer diese in einem auf die Dachöffnung 2 montierten Zustand überspannenden flexiblen Dachhaut 6 darstellt. Von den Längsstreben 7 bis 11 bildet jeweils eine die Dachhaut 6 in Fahrzeugquerrichtung begrenzende Längsstrebe einen Seitenholm 7 bzw. 8, wobei ein erster Seitenholm 7 vorliegend zur Verbindung mit Fahrzeugseitenelementen auf einer Beifahrerseite des Kraftfahrzeuges und der zweite Seitenholm 8 zur Verbindung mit Fahrzeugseitenelementen an der Fahrerseite des Kraftfahrzeuges 1 ausgelegt ist.

Zwischen den Seitenholmen 7 und 8 sind als weitere Längsstreben mehrere Längsspriegel 9, 10, 11 vorgesehen, welche im montierten Zustand die Dachhaut 6 stabilisieren und an dem Windschutzscheibenrahmen 3 sowie an dem heckseitigen Überrollbügel 4 an jeweils zueinander fluchtenden Aufnahmen 12, 13 anlegbar sind, wobei die Aufnahmen 12, 13 hier nutenartig ausgebildet sind.

Die Längsspriegel 9, 10, 11 sind vorzugsweise hinsichtlich ihrer Biegbarkeit unterschiedlich ausgestaltet, um ein optimales Strömungsverhalten des Verdecks 5 zu gewährleisten.

Die Seitenholme 7, 8 sind bei dem gezeigten Ausführungsbeispiel in zweischaliger Blechbauweise ausgeführt und tragen jeweils eine seitliche Dichtung 14, welche im Einbauzustand mit einem seitlich angrenzenden Fahrzeugelement, insbesondere einer Seitenscheibe 15, dichtend zusammenwirkt.

Zur Verbindung mit beifahrerseitigen Fahrzeugseitenelementen, welche vorliegend zweckmäßigerweise frontseitig der Windschutzscheibenrahmen 3 im Bereich einer beifahrerseitigen A-Säule 16 und heckseitig ein seitlicher Schenkel 4A des Überrollbügels 4 darstellen, dient eine konstruktiv einfache Nase-Nut-Steckverbindung, wobei an den Stirnflächen des ersten Seitenholms 7 eine Nase und an der A-Säule 16 und dem entsprechenden Schenkel 4A des Überrollbügels 4 eine gekrümmte Nut vorgesehen sein kann, in die sich die jeweilig eingeführte Nase bei einer Spannung des Verdecks 5 in Fahrzeugquerrichtung einspreizt.

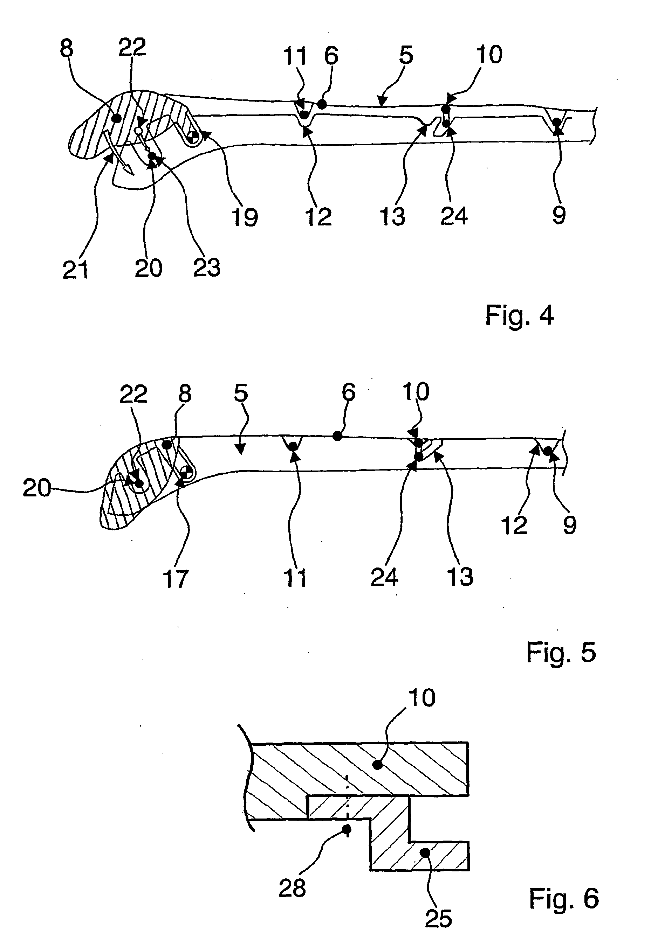

Der zweite, fahrerseitige Seitenholm 8 ist, wie insbesondere den Fig. 4 und Fig. 5 zu entnehmen ist, an seiner Verbindungsstelle mit den zugeordneten fahrerseitigen Fahrzeugseitenelementen, welche hier eine fahrerseitige A-Säule 18 und ein fahrerseitiger Schenkel 4B des Überrollbügels 4 darstellen, um eine Schwenkachse 17 drehbar gelagert. Wenn die vormontierte Einheit des Verdecks 5 nach einem Befestigen des ersten Seitenholms 7 auf der Beifahrerseite über die Dachöffnung 2 ausgebreitet wird, wird der fahrerseitige Seitenholm 8 in einem die Schwenkachse 17 bildende Drehelement in eine Nut 19 eingesetzt und im Einbauzustand manuell derart nach unten verschwenkt, daß er über Rastelemente mit den zugeordneten Fahrzeugseitenelementen eine Rastverbindung 20 ausbildet.

Bei dieser Schwenkbewegung, welche in Fig. 4 mit einem Pfeil 21 angedeutet ist, wird ein die Rastverbindung 20 bildender, federbelasteter Dorn 22 in eine entsprechende Ausnehmung 23 eingerastet, womit der fahrerseitige Seitenholm 8 auf einfache Art und Weise sicher arretiert ist.

Während des manuellen Ausbreitens bzw. Führens des Verdecks 5 über die Dachöffnung 2 gelangen die Längsspriegel 9, 10, 11, welche jeweils schlaufenartig oder taschenartig von der flexiblen Dachhaut 6 umgeben sind, von selbst in die ihnen zugeordneten nutenartigen Aufnahmen 12, 13.

Zur Vermeidung eines Ballooning bei schneller Fahrt ist für einen mittig angeordneten Längsspriegel 13 eine Verriegelungseinrichtung 24 an seiner windschutzscheibenseitigen Aufnahme 13 vorgesehen, wobei die Verriegelungseinrichtung 24 hier durch einen wenigstens annähernd L- bzw. C-förmigen Querschnitt der Aufnahme 13 und ein zum Eingriff mit diesem ausgelegtes, in Fig. 6 detaillierter dargestelltes Hakenelement 25 gebildet wird.

Das Hakenelement 25 ist bei dem vorliegenden Ausführungsbeispiel als separates, annähernd L-förmiges Bauteil ausgebildet, welches an einem abgeflachten Endbereich des zugeordneten Längsspriegels 10 mittels einer Schraubverbindung 28 befestigt ist. Bei einem Spannen des Verdecks 5 über die Fahrzeugbreite spreizt sich der Haken 25 in der L- bzw. C-förmigen Aufnahme 13 ein und verhindert zuverlässig ein Anheben des Längsspriegels 13.

Selbstverständlich kann in einer hiervon abweichenden Ausführung auch eine einteilige Ausführung des Längsspriegels mit dem Hakenelement oder jede andere bekannte Befestigungsart sowie ein anderes Hakenelement vorgesehen sein.

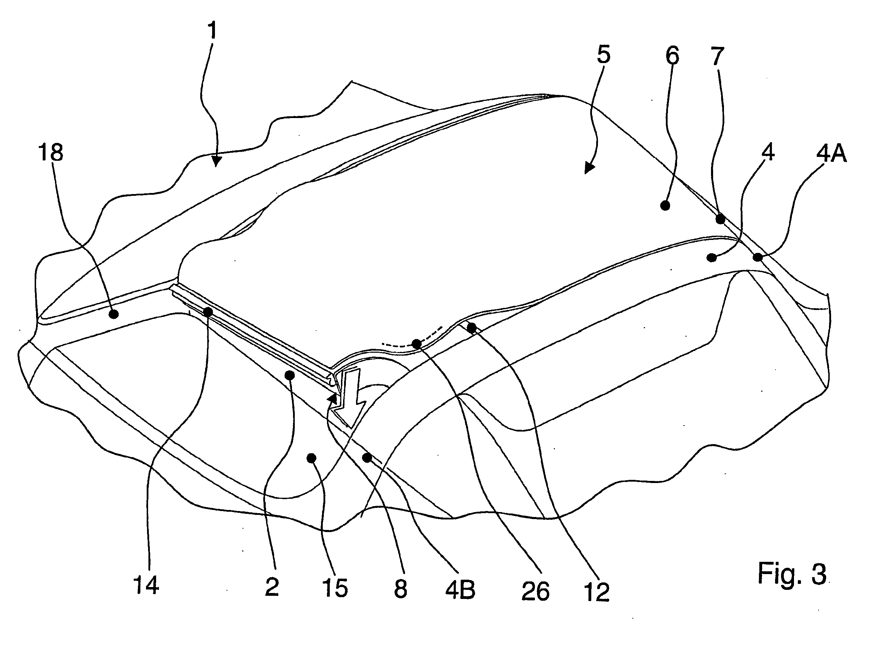

Zur Dichtung des Verdecks 5 weist die Dachhaut 6 im Bereich der Auflage an dem Windschutzscheibenrahmen 3 und an dem Überrollbügel 4 ein in Fig. 3 strichliert angedeutetes Spannseil 26 auf, welches mit einer an dem Windschutzscheibenrahmen 3 und an dem Überrollbügel 4 angeordneten Dichteinrichtung, welche in einfachster Weise ein Dichtband 27 darstellt, im montiertem Zustand dichtend zusammenwirkt.

Um das gezeigte Verdeck 5 abzubauen wird es in Fahrzeugquerrichtung als eine Einheit zusammengelegt, wobei das Verdeck 5 sowohl gefaltet als auch gerollt werden kann.

Bei der gezeigten bevorzugten Ausführungsvariante stellt die Einheit des Verdecks 5 einen Rollkörper dar, wobei der beifahrerseitige Seitenholm 7 ein äußeres Rollenende und der fahrerseitige Seitenholm 8 ein inneres Rollenende bildet.

Genauso wie die Zusammenlegung des Verdecks auf unterschiedliche Weise erfolgen kann, kann selbstverständlich auch ein umgekehrter Aufbau des Verdecks - ausgehend von dem fahrerseitigen Seitenholm 8 - vorgesehen sein.

### Bezugszeichen

- 1: Kraftfahrzeug
- 2: Dachöffnung
- 3: Windschutzscheibenrahmen
- 4: Bügel, Überrollbügel
- 4A: seitlicher Bügelschenkel
- 4B: seitlicher Bügelschenkel
- 5: Verdeck
- 6: Dachhaut
- 7: Seitenholm
- 8: Seitenholm
- 9: Längsspriegel
- 10: Längsspriegel
- 11: Längsspriegel
- 12: Aufnahme
- 13: Aufnahme
- 14: seitliche Dichtung
- 15: Seitenscheibe
- 16: A-Säule
- 17: Schwenkachse
- 18: A-Säule
- 19: Nut
- 20: Rastverbindung
- 21: Pfeil
- 22: Dorn
- 23: Ausnehmung
- 24: Verriegelungseinrichtung
- 25: Hakenelement
- 26: Spannseil
- 27: Dichtband
- 28: Schraubverbindung

## Patentansprüche

1. Verdeck für ein Kraftfahrzeug, welches eine Dachöffnung (2) übergreifende Längsstreben (7 bis 11) und eine die Fahrzeugbreite überspannende flexible Dachhaut (6) aufweist, und in montiertem Zustand frontseitig an einem Windschutzscheibenrahmen (3) und heckseitig an einem die Fahrzeugbreite überspannenden Bügel (4) festgelegt ist, wobei die Dachhaut (6) und die Längsstreben (7 bis 11) zu einer vormontierten Einheit verbunden sind, welche zum Ablegen in Fahrzeugquerrichtung zusammenlegbar ist,
**dadurch gekennzeichnet,**
**daß** jeweils eine die Dachhaut (6) in Fahrzeugquerrichtung begrenzende Längsstrebe (7, 8) als ein mit wenigstens einem Fahrzeugseitenelement (4A, 4B, 16, 18) verbindbarer Seitenholm ausgebildet ist, wobei die vormontierte Einheit über die Dachöffnung (2) spannbar ist, indem ein erster Seitenholm (7) an den ihm zugeordneten Fahrzeugseitenelementen (4A, 16) oberhalb einer Seitenscheibe befestigt wird und der zweite Seitenholm (8) in Fahrzeugquerrichtung über die Dachöffnung (2) bis zu einer Verbindungsstelle mit diesem zugeordneten Fahrzeugseitenelementen (4B, 18) oberhalb einer Seitenscheibe (15) geführt und hieran befestigt wird.

2. Verdeck nach Anspruch 1,
**dadurch gekennzeichnet,**
**daß** wenigstens eine, vorzugsweise eine Mehrzahl an Längsstreben als die Dachhaut (6) stabilisierende Längsspriegel (9, 10, 11) ausgebildet ist.

3. Verdeck nach Anspruch 2,
**dadurch gekennzeichnet,**
**daß** an dem Windschutzscheibenrahmen (3) und an dem heckseitigen Bügel (4) jeweils zueinander fluchtende Aufnahmen (12, 13) für jeweils einen Längsspriegel (9, 10, 11) ausgebildet sind.

4. Verdeck nach Anspruch 3,
**dadurch gekennzeichnet,**
**daß** die Aufnahmen (12, 13) nutenartig ausgebildet sind.

5. Verdeck nach Anspruch 3 oder 4,
**dadurch gekennzeichnet,**
**daß** wenigstens eine Aufnahme (13) für wenigstens einen Längsspriegel (10) mit einer den Längsspriegel (10) im eingesetzten Zustand haltenden Verriegelungseinrichtung (24) ausgebildet ist.

6. Verdeck nach Anspruch 5,
**dadurch gekennzeichnet,**
**daß** die Verriegelungseinrichtung (24) durch einen wenigstens annähernd L-förmigen Querschnitt der Aufnahme (13) und ein zum Eingriff mit diesem ausgelegtes Hakenelement (25) an dem zugeordneten Längsspriegel (10) gebildet wird.

7. Verdeck nach Anspruch 5 oder 6,
**dadurch gekennzeichnet,**
**daß** der wenigstens eine durch die Verriegelungseinrichtung (24) gehaltene Längsspriegel (10) in einem fahrzeugmittigen Bereich angeordnet ist.

8. Verdeck nach einem der Ansprüche 2 bis 7,
**dadurch gekennzeichnet ,**
**daß** ein Längsspriegel (9, 10, 11) jeweils schlaufenartig oder taschenartig von der Dachhaut (6) umgeben ist.

9. Verdeck nach einem der Ansprüche 2 bis 8,
**dadurch gekennzeichnet,**
**daß** beim Spannen der vormontierten Einheit über die Dachöffnung (2) der wenigstens eine Längsspriegel (9, 10, 11) in Anlage mit einer ihm zugeordneten Aufnahme (12, 13) gelangt.

10. Verdeck nach Anspruch 9,
**dadurch gekennzeichnet,**
**daß** der erste Seitenholm (7) an den ihm zugeordneten Fahrzeugseitenelementen (4A, 16) mittels einer Nase-Nut-Steckverbindung befestigbar ist.

11. Verdeck nach Anspruch 9 oder 10,
**dadurch gekennzeichnet,**
**daß** der zweite Seitenholm (8) an den ihm zugeordneten Fahrzeugseitenelementen (4B, 18) zur Spannung der Dachhaut (6) um eine Schwenkachse (17) drehbar lagerbar und mit den Fahrzeugseitenelementen (4B, 18) über eine Rastverbindung (20) verbindbar ist.

12. Verdeck nach einem der Ansprüche 1 bis 11,
**dadurch gekennzeichnet,**
**daß** ein mit den Seitenholmen (7, 8) frontseitig verbindbares Fahrzeugseitenelement durch den Windschutzscheibenrahmen (3) im Bereich einer A-Säule (16, 18) und ein mit den Seitenholmen (7, 8) heckseitig verbindbares Fahrzeugseitenelement durch den heckseitigen Bügel (4) gebildet wird.

13. Verdeck nach einem der Ansprüche 1 bis 12,
**dadurch gekennzeichnet,**
**daß** die vormontierte Einheit einen im auf die Dachöffnung (2) aufgesetzten Zustand entrollten Rollkörper bildet, wobei einer der Seitenholme (7) ein äußeres Rollenende des Rollenkörpers darstellt.

14. Verdeck nach einem der Ansprüche 1 bis 13,
**dadurch gekennzeichnet,**
**daß** die Dachhaut (6) im Bereich der Auflage an dem Windschutzscheibenrahmen (3) und/oder an dem heckseitigen Bügel (4) ein Spannseil (26) aufweist, welches mit einer an dem Windschutzscheibenrahmen (3) und/oder an dem heckseitigen Bügel (4) angeordneten Dichteinrichtung (27) im montierten Zustand dichtend zusammenwirkt.

## Claims

1. A hood for a motor vehicle, which hood comprises longitudinal struts (7 to 11) extending over a roof opening (2) and a flexible roof membrane (6) extending over the width of the vehicle, and which hood, in the mounted state, is fixed at the front end to a windshield frame (3) and at the rear end to a bracket (4) extending over the width of the vehicle, wherein the roof membrane (6) and the longitudinal struts (7 to 11) are connected to form a pre-assembled unit, which can be folded for storage in the transverse direction of the vehicle, **characterized in that** a longitudinal strut (7, 8) each delimiting the roof membrane (6) in the transverse direction of the vehicle is provided as a lateral bar which can be connected to at least one lateral vehicle element (4A, 4B, 16, 18), wherein the pre-assembled unit can be extended over the roof opening (2) by mounting a first lateral bar (7) to its assigned lateral vehicle elements (4A, 16) above a side window and by guiding the second lateral bar (8) in the transverse direction of the vehicle over the roof opening (2), up to a connecting point with its assigned lateral vehicle elements (4B, 18) above a side window (15) and being mounted to the latter.

2. A hood according to claim 1, **characterized in that** at least one, preferably a multiplicity, of longitudinal struts are provided as longitudinal ribs (9, 10, 11) stabilizing the roof membrane (6).

3. Hood according to claim 2, **characterized in that** respective mutually aligned receiving parts (12, 13) for one longitudinal rib (9, 10, 11) each are provided on the windshield frame (3) and on the rear bracket (4).

4. Hood according to claim 3, **characterized in that** the receiving parts (12, 13) are provided in the shape of grooves.

5. Hood according to claim 3 or 4, **characterized in that** at least one receiving part (13) for at least one longitudinal rib (10) is provided with a locking device (24) holding the longitudinal rib (10) in the inserted state.

6. Hood according to claim 5, **characterized in that** the locking device (24) is formed by an at least approximately L-shaped cross section of the receiving part (13), and a hook element (25) adapted for engagement therewith is formed on the assigned longitudinal rib (10).

7. Hood according to claim 5 or 6, **characterized in that** the at least one longitudinal rib (10) held by the locking device (24) is arranged at a central region of the vehicle.

8. Hood according to any one of claims 2 to 7, **characterized in that** a longitudinal rib (9, 10, 11) is respectively enclosed by the roof membrane (6) in a loop-like or pocket-like manner.

9. Hood according to any one of claims 2 to 8, **characterized in that** when extending the pre-assembled unit over the roof opening (2) the at least one longitudinal rib (9, 10, 11) comes into contact with a receiving part (12, 13) assigned to said longitudinal rib.

10. Hood according to claim 9, **characterized in that** the first lateral bar (7) can be mounted to its assigned vehicle elements (4A, 16) by means of a lug-and-groove fit.

11. Hood according to claim 9 or 10, **characterized in that** the second lateral bar (8) can be supported on its assigned lateral vehicle elements (4B, 18) so as to be rotatable about a pivoting axis (17) in order to tighten the roof membrane (6) and can be connected to said lateral vehicle elements (4B, 18) by a latching connection (20).

12. Hood according to any one of claims 1 to 11, **characterized in that** a lateral vehicle element which can be connected to the front end of the lateral bars (7, 8) is formed by the windshield frame (3) in the region of an A-pillar (16, 18), and a lateral vehicle element which can be connected to the rear end of the lateral bars (7, 8) is formed by the rear bracket (4).

13. Hood according to any one of claims 1 to 12, **characterized in that** the pre-assembled unit forms a rolling body which is rolled out in its state set on the roof opening, wherein one of the lateral bars (7) constitutes an outer roll end of the rolling body.

14. Hood according to any one of claims 1 to 13, **characterized in that** the roof membrane (6) comprises, in the region where it is supported on the windshield frame (3) and/or on the rear bracket (4), a tension rope (26) which, in the mounted state, cooperates in a sealing manner with a sealing device (27) arranged on the windshield frame (3) and/or on the rear bracket (4).

## Revendications

1. Capote pour un véhicule automobile, ladite capote comportant des montants longitudinaux (7 à 11) recouvrant une ouverture de toit (2) et une couverture de toit (6) flexible recouvrant la largeur du véhicule, capote qui est fixée à l'état monté par son extrémité avant à un cadre de pare-brise (3) et par son extrémité arrière à un arceau (4) recouvrant la largeur du véhicule, ladite couverture de toit (6) et lesdits montants longitudinaux (7 à 11) étant reliés de manière à constituer un ensemble prémonté que l'on peut replier pour son rangement dans la direction transversale du véhicule, **caractérisée en ce qu'**un montant longitudinal (7, 8) délimitant la couverture de toit (6) dans la direction transversale du véhicule est à chaque foi réalisé sous la forme d'un arceau latéral qui peut être relié à au moins un élément latéral (4A, 4B, 16, 18) du véhicule, l'ensemble prémonté pouvant être tendu sur l'ouverture du toit (2) en fixant un premier arceau latéral (7) à ses éléments latéraux associés (4A, 16) du véhicule au-dessus d'une fenêtre latérale et en guidant le deuxième arceau latéral (8) sur l'ouverture du toit (2) dans la direction transversale du véhicule, jusqu'à une jonction avec ses éléments latéraux associés (4B, 18) du véhicule au-dessus d'une fenêtre latérale (15) et en fixant le deuxième arceau latéral (8) à cette jonction.

2. Capote selon la revendication 1, **caractérisée en ce qu'**au moins un, et de préférence plusieurs montants longitudinaux sont pourvus comme nervures longitudinales (9, 10, 11) stabilisant la couverture de toit (6).

3. Capote selon la revendication 2, **caractérisée en ce que** des logements (12, 13) mutuellement alignés et destinés chacun pour une nervure longitudinale (9, 10, 11) respective sont réalisés sur le cadre de pare-brise (3) et sur l'arceau arrière (4).

4. Capote selon la revendication 3, **caractérisée en ce que** les logements (12, 13) sont réalisés à la manière de rainures.

5. Capote selon la revendication 3 ou 4, **caractérisée en ce qu'**au moins un logement (13) pour au moins une nervure longitudinale (10) est pourvu d'un dispositif de verrouillage (24) tenant la nervure longitudinale (10) dans l'état inséré.

6. Capote selon la revendication 5, **caractérisée en ce que** le dispositif de verrouillage (24) est constitué par une section transversale au moins sensiblement en forme de L d'un logement (13) et par un élément de crochet (25) sur la nervure longitudinale (10) destiné à venir en prise avec ce logement (13).

7. Capote selon la revendication 5 ou 6, **caractérisée en ce que** l'au moins une nervure longitudinale (10) tenue par le dispositif de verrouillage (24) est disposée dans une région centrale du véhicule.

8. Capote selon l'une quelconque des revendications 2 à 7, **caractérisée en ce qu'**une nervure longitudinale (9, 10, 11) est à chaque fois entourée de la couverture de toit (6) à la manière d'une boucle ou d'une poche.

9. Capote selon l'une quelconque des revendications 2 à 8, **caractérisée en ce qu'**en étendant l'ensemble prémonté sur l'ouverture du toit (2) ladite au moins une nervure longitudinale (9, 10, 11) vient en contact avec un logement (12, 13) associé à cette nervure longitudinale.

10. Capote selon la revendication 9, **caractérisée en ce que** le premier arceau latéral (7) peut être fixé à ses éléments latéraux (4B, 18) associés du véhicule au moyen d'un raccordement languette/rainure.

11. Capote selon la revendication 9 ou 10, **caractérisée en ce que** le deuxième arceau latéral (8) peut être monté en rotation autour d'un axe de pivotement (17) sur ses éléments latéraux (4B, 18) associés du véhicule afin de tendre la couverture de toit (6) et peut être relié avec les éléments latéraux (4B, 18) du véhicule par un raccordement par encliquetage (20).

12. Capote selon l'une quelconque des revendications 1 à 11, **caractérisée en ce qu'**un élément latérale de véhicule qui peut être relié à l'extrémité avant des barres latérales (7, 8) est constitué par le cadre de pare-brise (3) dans la région d'un pilier A (16, 18), et un élément latéral du véhicule qui peut être relié à l'extrémité arrière des barres latérales (7, 8) est constitué par l'arceau arrière (4).

13. Capote selon l'une quelconque des revendications 1 à 12, **caractérisée en ce que** l'ensemble prémonté constitue un corps roulant qui est déroulé dans son état placé sur l'ouverture du toit, l'une desdites barres latérales (7) constituant un extrémité extérieur du déroulement du corps roulant.

14. Capote selon l'une quelconque des revendications 1 à 13, **caractérisée en ce que** la couverture de toit (6) comporte, dans la région où elle est en appui sur le cadre de pare-brise (3) et/ou sur l'arceau arrière (4), une câble de tension (26) coopérant, à l'état monté, de manière étanche avec un dispositif d'étanchéité (27) disposé sur le cadre de pare-brise (3) et/ou sur l'arceau arrière (4).
